# EUROPÄISCHE PATENTSCHRIFT

(11) **EP 3 830 931 B1**
(45) Veröffentlichungstag und Bekanntmachung des Hinweises auf die Patenterteilung: **18.02.2026**
(21) Anmeldenummer: 19769069.6
(22) Anmeldetag: 03.09.2019
(51) Int. Cl.: H02K 1/30, H02K 1/32, H02K 7/08

(54) **LÄUFERROHR FÜR EINE ELEKTRISCHE MASCHINE EINES FAHRZEUGS**
ROTOR TUBE FOR AN ELECTRIC MACHINE OF A VEHICLE
TUBE DE ROTOR POUR MACHINE ÉLECTRIQUE D'UN VÉHICULE

(30) Priorität: 26.09.2018 DE 102018216490
(43) Veröffentlichungstag der Anmeldung: 09.06.2021
(73) Patentinhaber: Siemens Mobility GmbH, 80997 München (DE)
(72) Erfinder: OUDE KOTTE, Freerk Jacobus, 90547 Stein (DE); SEITZ, Peter, 91224 Pommelsbrunn (DE)
(74) Vertreter: Siemens Patent Attorneys
(86) Internationale Anmeldenummer: PCT/EP2019/073382
(87) Internationale Veröffentlichungsnummer: WO 2020/064272

(56) Entgegenhaltungen:
- EP-A1- 1 477 380
- DE-A1- 10 322 022
- DE-A1- 102007 039 186
- DE-A1- 102015 213 609
- US-A1- 2006 022 541

## Beschreibung

Die vorliegende Erfindung betrifft eine elektrische Maschine mit einem Läuferrohr sowie ein Fahrzeug mit einer solchen elektrischen Maschine.

Bei Schienenfahrzeugen mit einen so genannten Direktantrieb treibt ein Motorläufer die Radsatzwelle ohne Getriebe direkt an. Ein solches Läuferrohr hat in der Regel mehrere Funktionen zu erfüllen und ist aus mehreren Einzelteilen aufgebaut, die entsprechend innerhalb strenger Toleranzen aufeinander abzustimmen sind.

Ein Beispiel für eine solche Maschine ist in DE 10 2015 213609 A1 offenbart.

Der Erfindung liegt die Aufgabe zugrunde, eine elektrische Maschine eines Fahrzeugs zu schaffen, das zu einer vereinfachten und kostengünstigen Fertigung beitragen kann sowie einen zuverlässigen und sicheren Betrieb der elektrischen Maschine ermöglicht.

Diese Aufgabe wird durch die Merkmale des unabhängigen Patentanspruchs gelöst. Vorteilhafte Ausgestaltungen sind in den Unteransprüchen angegeben.

Gemäß einem ersten Aspekt umfasst ein Läuferrohr für eine elektrische Maschine eines Fahrzeugs ein Außenrohr, einen ersten und einen zweiten Kopplungsabschnitt sowie eine erste und zweite Nabe. Die Kopplungsabschnitte und die Naben sind bezogen auf eine Längsachse des Läuferrohrs an gegenüberliegenden Endbereichen des Außenrohrs mit dem Außenrohr gekoppelt. Das Läuferrohr umfasst weiter ein Lüftungselement, welches mit dem Außenrohr gekoppelt ist, und ein Innenrohr, welches bezogen auf die Längsachse des Läuferrohrs innerhalb des Außenrohrs angeordnet ist, sodass das Außenrohr das Innenrohr umgibt. Zumindest zwei Komponenten aus erstem Kopplungsabschnitt, zweitem Kopplungsabschnitt, erster Nabe, zweiter Nabe, dem Außenrohr, dem Lüftungselement und dem Innenrohr sind einstückig mittels Gießen ausgebildet und realisieren eine gemeinsame Gusskomponente.

Mittels des beschriebenen Aufbaus eines Läuferrohrs sind Kosteneinsparungen bei der Fertigung realisierbar und es kann zudem zu einer sicheren und zuverlässigen Funktionalität des Läuferrohrs und einer zugehörigen elektrischen Maschine beigetragen werden.

Dadurch, dass zumindest zwei, vorzugsweise mehr als zwei, Komponenten als eine gemeinsame Gusskomponente ausgebildet sind, werden diese einzelnen Komponenten in einem einzigen Bauteil mit mehreren Funktionen integriert. Im Vergleich zu einem mehrteiligen Aufbau werden somit weniger Bauteile benötigt und das Läuferrohr kann materialsparender gefertigt werden, sodass ein entsprechender Gewichtsvorteil realisierbar ist. Aufgrund der weniger anzufertigenden Bauteile kann ein Zusammenbau des Läuferrohrs aufwandsärmer und zeitsparender durchgeführt werden. Somit können weitere Kosten eingespart werden und zudem ist es einfacher, technische Anforderungen an das Läuferrohr zu erfüllen.

Darüber hinaus werden Trennfugen zwischen einzelnen Bauteilen vermieden beziehungsweise reduziert, die jeweils eine potenzielle Problemstelle, zum Beispiel bezüglich Passung und Korrosion, darstellen. Aufgrund der Integration mehrerer Komponenten in einem einstückigen Gussteil entfallen solche Trennfugen und es kann zu einem zuverlässigen Betrieb und einer erhöhten Lebensdauer des Läuferrohr und einer mit einem solchen Läuferrohr versehenen elektrischen Maschine beigetragen werden. Außerdem kann auf diese Weise zu einer höheren Stabilität beigetragen werden.

Insbesondere kann ein solches Läuferrohr für eine elektrische Maschine eines Schienenfahrzeugs eingesetzt werden und zu einem zuverlässigen und sicheren Betrieb der elektrischen Maschine beitragen. Beispielsweise handelt es sich um ein Schienenfahrzeug mit eigenem Direktantrieb, bei dem das Läuferrohr die Radsatzwelle ohne Getriebe direkt über eine Kupplung antreibt. Dabei kommen aufgrund des hohen Drehmoments vorzugsweise direktantreibende permanenterregte Synchronmaschinen zum Einsatz. Bei solchen elektrischen Maschinen verläuft die Radsatzwelle durch die Maschine und das Läuferrohr ist mittels der Kupplung mit der Radsatzwelle gekoppelt.

Eine solche elektrische Maschine ist aufgrund der permanenterregten Magneten in der Regel gekapselt aufgebaut und wird zum Beispiel über einen Wassermantel gekühlt. Um Wärme aus dem Läuferrohr abzuführen, ist zum Beispiel im Inneren der Maschine noch ein geschlossener Luftkühlkreis vorgesehen, welcher die Wärme zum Beispiel über den Wassermantel in das Kühlwasser transportiert. Ein solcher Aufbau einer Maschine und eines Innenkühlkreislaufs bedingt einen gewissen Aufbau des Läuferrohrs, das doppelwandig ausgeführt wird und gleichzeitig mehrere Funktionen erfüllt. Mittels des Läuferrohrs wird das Drehmoment mittels einer Kupplung auf die Radsatzwelle übertragen und zudem wird mit dem Lüftungselement des Läuferrohrs die Luft im inneren Kühlkreis umgewälzt.

Das Innenrohr verhindert eine Verschmutzung des Innenraumes des Läuferrohrs und dichtet den inneren Kühlkreislauf ab. In Bezug auf die Längsachse des Läuferrohrs ist das Innenrohr radial näher an der Längsachse angeordnet als das Außenrohr. Mit anderen Worten sind das Innenrohr und das Außenrohr zum Beispiel zylinderförmig ausgebildet, sodass ein Durchmesser des Innenrohrs kleiner ist als ein Durchmesser des Außenrohrs. Das Außenrohr verbindet die Naben mit dem Aktivteil und ist zur Aufnahme des Blechpakets bzw. der innenliegenden Komponenten des Läuferrohrs ausgebildet.

Die Kopplungsabschnitte realisieren jeweils Abschnitte des Läuferrohrs, die mit weiteren Komponenten, wie anzubringenden Lagern, koppelbar sind. Die Kopplungsabschnitte stellen Läuferrohrlagerstellen dar und bilden eine Kopplungsstelle zum Anbringen der Lager aus. Die Kopplungsabschnitte können daher auch als Lagerstellen bezeichnet werden. Der erste Kopplungsabschnitt ist beispielsweise antriebsseitig angeordnet und dient zudem als Anschlussstelle für die Kupplung, die zum Beispiel mit dem ersten Kopplungsabschnitt verschraubt wird. Darüber hinaus kann der erste und/oder zweite Kopplungsabschnitt auch zum Anbringen weiterer Komponenten vorgesehen sein. Insbesondere bei einem möglichen beidseitigen Abtrieb einer zugehörigen Maschine können beide Kopplungsabschnitte als Kopplungs- oder Lagerstelle vorgesehen sein.

Die erste und zweite Nabe sind zum Beispiel offen gestaltet beziehungsweise mit Ausnehmungen versehen, sodass Luft zwischen dem Innenrohr und dem Außenrohr durch die Innenkühlung laufen kann. Das Lüftungselement fungiert als Lüfter, welcher die Luft für die Innenkühlung umwälzt und zu einem zuverlässigen Abtransport von Wärme beiträgt.

Bei konventionellen Läuferrohren werden die verschiedenen Komponenten einzeln zerspant und nachfolgend zusammengebaut. Unter anderem werden die Naben auf das Innenrohr gepresst und zudem das Drehmoment mit dem Innenrohr übertragen, sodass dieses entsprechend dickwandig auszubilden ist. Das Außenrohr wird wiederum auf die Naben aufgesetzt und mit diesen verbunden, um ein doppelwandiges Läuferrohr auszubilden. Dabei sind Toleranzen der einzelnen Bauteile streng einzuhalten, um den technischen Anforderungen des Läuferrohrs zu genügen und eine zuverlässige Funktion des Läuferrohrs zu ermöglichen.

Mittels des beschrieben Läuferrohrs wird ein Zusammenbau vereinfacht und zudem Toleranzbedingungen entschärft, dadurch dass Einzelteile zusammen als ein Gussbauteil ausgeführt werden. Dies ermöglicht fernen den Einsatz eines dünnwandigen Innenrohrs als einfaches Schutzrohr, um den Innenraum des Läuferrohrs nach innen zu verschließen und abzudichten.

Gemäß einer bevorzugten Weiterbildung des Läuferrohrs sind die erste Nabe, die zweite Nabe und das Außenrohr einstückig mittels Gießen ausgebildet und realisieren die Gusskomponente. Gemäß einer besonders bevorzugten Weiterbildung sind ferner auch der erste und der zweite Kopplungsabschnitt einstückig mittels Gießen ausgebildet und realisieren die Gusskomponente.

Auch das Lüftungselement kann ferner in die einstückige Gusskomponente mittels Gießen ausgebildet sein. Vorzugsweise ist das Lüftungselement in die zweite Nabe integriert, um einen platz- und materialsparenden Aufbau des Läuferrohrs zu realisieren.

Die erste Lagerstelle beziehungsweise der erste Kopplungsabschnitt ist zum Beispiel mittels der ersten Nabe einstückig mit dem Außenrohr ausgebildet und in einem Endbereich des Außenrohrs an einer Innenseite des Außenrohrs mit diesem verbunden. An dem gegenüberliegenden Endbereich des Außenrohrs schließt dann beispielsweise weiter einstückig ausgebildet die zweite Nabe mit integriertem Lüftungselement und darauffolgend der zweite Kopplungsabschnitt an. Kopplungsabschnitte und Naben sowie Lüftungselement sind dann in das Außenrohr integriert und als ein Bauteil zusammengeführt. Auf diese Art und Weise entsteht ein kompaktes Gussbauteil, welches eine zuverlässige und verteilhafte Funktion des Läuferrohrs ermöglicht.

Gemäß einer Weiterbildung des Läuferrohrs sind die erste und zweite Nabe an einer Innenseite des Außenrohrs angeordnet, die dem Innenrohr zugewandt ist. Gemäß einer weiteren Weiterbildung des Läuferrohrs sind der erste Kopplungsabschnitt mittels der ersten Nabe und der zweite Kopplungsabschnitt mittels der zweiten Nabe mit der Innenseite des Außenrohrs gekoppelt sind.

Gemäß einer Weiterbildung umfasst das Läuferrohr ein oder mehrere Positionierungselemente, die dazu ausgebildet sind, das Innenrohr bezogen auf die Längsachse in einer vorgegebenen Position relativ zum Außenrohr zu positionieren. Solche Positionierungselemente realisieren Montagehilfen, um zum Beispiel Anschläge für eine Position des Innenrohrs innerhalb des Außenrohrs vorzugeben oder um eine zuverlässige Rohrzentrierung bezüglich der Längsachse einzurichten.

Gemäß einer Weiterbildung des Läuferrohrs ist das zumindest eine Positionierungselement ebenfalls einstückig mittels Gießen ausgebildet, sodass es die Gusskomponente mit realisiert.

Gemäß einem weiteren Aspekt umfasst eine elektrische Maschine eine Ausgestaltung des zuvor beschriebenen Läuferrohrs, welches mit der elektrischen Maschine gekoppelt ist. Das Läuferrohr kann insbesondere bei direktantreibenden permanenterregten Synchronmaschinen für einen direkten Antrieb eines Fahrzeugs, insbesondere einer Radsatzwelle eines Schienenfahrzeugs, Einsatz finden. Darüber hinaus ist aber auch ein Einsatz eines solchen Läuferrohrs bei Kraftfahrzeugen, insbesondere Lastkraftwagen, möglich, wobei das Läuferrohr an beiden Enden jeweils eine Kopplungsstelle aufweisen kann. Dadurch, dass das Schienenfahrzeug, eine Ausgestaltung des zuvor beschriebenen Läuferrohrs umfasst, sind, sofern zutreffend, beschriebene Eigenschaften und Merkmale des Läuferrohrs auch für das Schienenfahrzeug offenbart und umgekehrt.

Gemäß einem weiteren Aspekt umfasst ein Fahrzeug zumindest eine zuvor beschriebene elektrische Maschine. Das Fahrzeug kann dabei als ein Schienenfahrzeug ausgestaltet sein und die elektrische Maschine insbesondere eine Radsatzwelle antreiben.

Ausführungsbeispiele der Erfindung sind im Folgenden anhand der schematischen Zeichnungen näher erläutert. Es zeigen:
- Figur 1: eine schematische Darstellung eines Schienenfahrzeugs,
- Figur 2: ein Ausführungsbeispiel für ein Läuferrohr für eine elektrische Maschine des Schienenfahrzeugs nach Figur 1, und
- Figur 3: eine schematische Darstellung des Läuferrohrs gekoppelt mit einer elektrischen Maschine des Schienenfahrzeugs nach den Figuren 1 und 2.

Elemente gleicher Konstruktion und Funktion sind figurenübergreifend mit denselben Bezugszeichen gekennzeichnet.

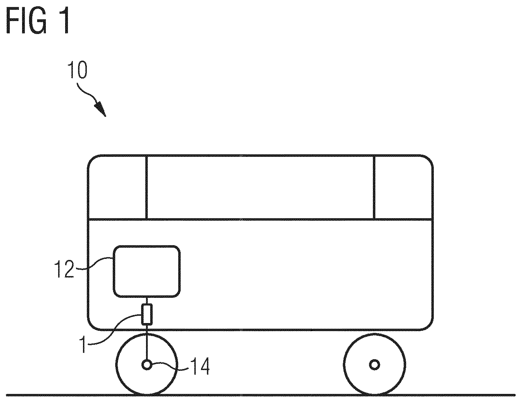

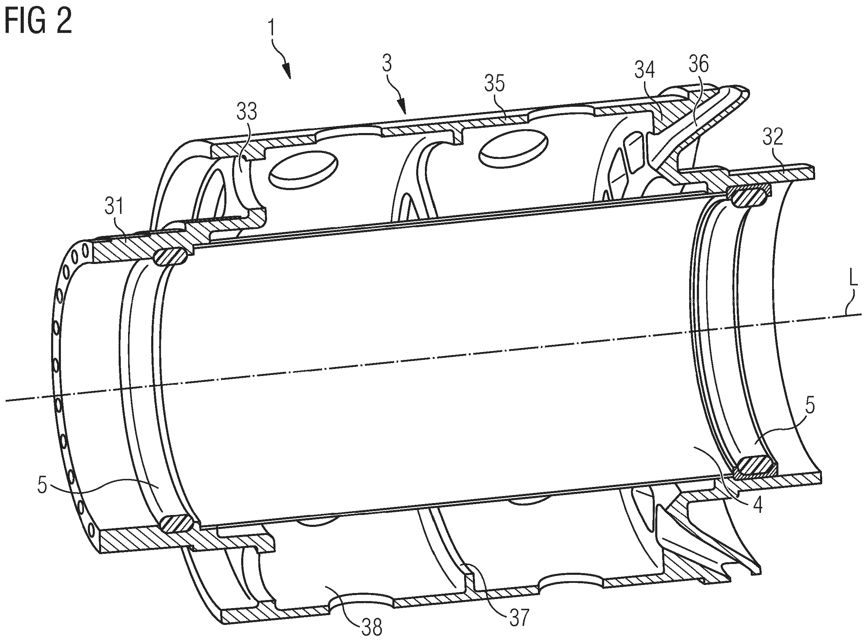

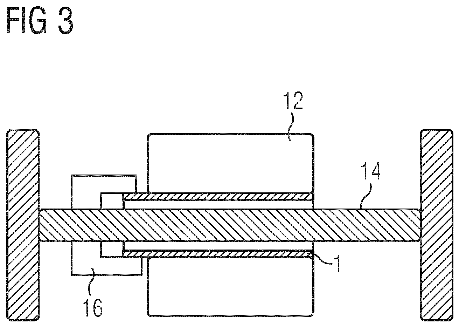

Figur 1 zeigt in einer schematischen Seitenansicht ein Schienenfahrzeug 10 mit einer elektrischen Maschine 12, welcher mittels eines Läuferrohrs 1 und einer Kupplung 16 mit einer Radsatzwelle 14 gekoppelt ist (siehe Figur 3). Mittels des Läuferrohrs 1 wird das Drehmoment der Maschine 12 auf die Radsatzwelle 14 übertragen und zudem wird Luft in einem inneren Kühlkreis umgewälzt. Wie nachfolgend anhand der Figur 2 erläutert wird, ermöglicht der Aufbau des Läuferrohrs 1 Kosteneinsparungen bei der Fertigung und zudem eine sichere und zuverlässige Funktionalität des Läuferrohrs 1 und der zugehörigen Maschine 12.

Figur 2 zeigt in einer perspektivischen Ansicht eine mögliche Ausgestaltung des Läuferrohrs 1. Das Läuferrohr 1 umfasst eine Gusskomponente 3, welche zylinderförmig ein Innenrohr 4 umgibt. Die Gusskomponente 3 ist einstückig mittels Gießen ausgebildet und weist ein Außenrohr 35, einen ersten und einen zweiten Kopplungsabschnitt 31, 32, die bezogen auf eine Längsachse L des Läuferrohrs 1 an gegenüberliegenden Endbereichen des Außenrohrs 35 mit dem Außenrohr 35 gekoppelt sind, und eine erste und zweite Nabe 33, 34, die bezogen auf die Längsachse L des Läuferrohrs 1 an den gegenüberliegenden Endbereichen des Außenrohrs 35 mit dem Außenrohr 35 gekoppelt sind. Die Gusskomponente 3 umfasst weiter ein Lüftungselement 36, welches mit dem Außenrohr 35 gekoppelt ist und integriert in der zweiten Nabe 34 ausgebildet ist. Auf diese Weise kann ein besonders platz- und materialsparender Aufbau des Läuferrohrs 1 realisiert werden. Darüber hinaus weist die Gusskomponente 3 ein ringförmiges Positionierungselement 37 auf, welches an einer Innenseite 38 des Außenrohrs 35 ausgebildet ist.

Darüber hinaus sind zwei weitere Positionierungselemente 5 vorhanden, welche wie auch das Positionierungselement 37 der Gusskomponente als Montagehilfen ein Halten und Positionieren des Innenrohrs 4 und eine vereinfachte Montage des Läuferrohrs 1 ermöglichen. Das Innenrohr 4 ist bezogen auf die Längsachse L des Läuferrohrs 1 innerhalb des Außenrohrs 35 angeordnet, sodass das Außenrohr 35 das Innenrohr 4 umgibt. Das Positionierungselement 37 weist bevorzugt eine Mehrzahl von Fingerelementen auf, die sich radial nach innen in Richtung der Längsachse L erstrecken und in einem montierten Zustand des Läuferrohrs 1 eine Außenseite des Innenrohrs 4 kontaktieren, welche dem Außenrohr 35 zugewandt ist.

Das illustrierte Läuferrohr 1 ist daher im Wesentlichen aus zwei einzelnen Bauteilen aufgebaut, der Gusskomponente 3 und dem Innenrohr 4. In einer alternativen Ausgestaltung des Läuferrohrs 1 kann auch eine andere Aufteilung der Integration von Einzelteilen vorgesehen sein. Zum Beispiel kann das Innenrohr 4 in verstärkter Ausführung mit den Kopplungsabschnitten 31, 32, den Naben 33, 34 und dem Lüftungselement 36 als ein gegossenes Bauteil ausgeführt sein und eine gemeinsame Gusskomponente realisieren, auf die das Außenrohr 35 aufgeschoben ist.

Der erste und zweite Kopplungsabschnitt 31, 32 bilden jeweilige Lagerstellen aus und können jeweils einstückig mittels Gießen an dem Außenrohr 35 oder der Gusskomponente mit dem Innenrohr 4 ausgebildet sein, oder es kann ein Kopplungsabschnitt 31 mit dem Außenrohr 35 und der andere Kopplungsabschnitt 32 mit dem Innenrohr 4 integriert ausgeführt sein.

Zumindest zwei Komponenten aus erstem Kopplungsabschnitt 31, zweitem Kopplungsabschnitt 32, erster Nabe 33, zweiter Nabe 34, dem Außenrohr 35, dem Lüftungselement 36 und dem Innenrohr 4 sind einstückig mittels Gießen als Gusskomponente 3 ausgebildet, um einen kompakten und vorteilhaften Aufbau des Läuferrohrs 1 zu realisieren. Gemäß dem in Figur 2 dargestellten Ausführungsbeispiel sind sieben funktionale Bauteile in einer gemeinsamen Gusskomponente 3 einstückig ausgebildet: Der erste Kopplungsabschnitt 31, welcher mittels der ersten Nabe 33 mit der Innenseite 38 des Außenrohrs 35 gekoppelt ist; der zweite Kopplungsabschnitt 32, welcher mittels der zweiten Nabe 34 mit der Innenseite 38 des Außenrohrs 35 gekoppelt ist; das Lüftungselement 36, welches in der zweiten Nabe 36 integriert ausgebildet ist; und das Positionierungselement 37, welches an der Innenseite 38 des Außenrohrs 35 ausgebildet ist.

Alternativ kann auch das Innenrohr 4 mit der ersten Nabe 33 und das Außenrohr 35 mit der zweiten Nabe 34 und gegebenenfalls mit dem Lüftungselement 36 jeweils als eine Gusskomponente ausgebildet sein, die miteinander gekoppelt eine Ausgestaltung des Läuferrohrs 1 realisieren. Das Außenrohr 35 kann auch als gewalztes Rohr bereitgestellt oder mittels Schleudergießen dünnwandig ausgebildet sein.

Das Innenrohr 4 dichtet den inneren Kühlkreislauf des Läuferrohrs 1 ab und verhindert eine Verschmutzung des Innenraumes. Mittels des beschriebenen Aufbaus ist es nicht erforderlich, weitere Bauteile auf das Innenrohr 4 zu pressen, und zudem erfolgen ein Kraftfluss und eine Drehmomentübertragung durch die Kopplungsabschnitte 31, 32 auf das Außenrohr 35. Daher kann das Innenrohr 4 beispielsweise aus Edelstahl mit einer relativ geringen Wandstärke von wenigen Millimetern ausgebildet sein. Im Vergleich zu konventionellen Läuferrohren kann das Innenrohr 4 des beschriebenen Läuferrohrs 1 deutlich dünnwandiger, vorzugsweise durch Metalldrücken oder Rollieren, ausgestaltet werden, sodass zu einer Material-, Gewichts- und Kostenersparnis beigetragen wird. Alternativ kann das Innenrohr 4 auch aus einem glasfaserverstärktem Kunststoff gefertigt und besonders gewichtsleicht ausgestaltet sein.

Das Innenrohr 4 bildet ein Segment, welches in einem montierten Zustand des Läuferrohrs 1 an einem Gesamtinnenrohr anschließt, das aus gusstechnischen und zerspanungstechnischen Gründen im Bereich zwischen der ersten Nabe 33 und der zweiten Nabe 34 unterbrochen ist, um unter anderem die Innenseite 38 des Außenrohrs 35 nach dem Gießen nachbearbeiten zu können. Um eine solche unterbrechende Öffnung nach der Zerspanung zu schließen, wird das Innenrohr 4, zum Beispiel als eine Art Schutzrohr aus Blech, in das Läuferrohr 1 verbaut und mit dem Gesamtinnenrohr einer zugehörigen Maschine gekoppelt. Das Innenrohr 4 stellt somit ein einteiliges Schutzrohr dar, welches das unterbrochene Gesamtinnenrohr in Bezug auf die zugehörige Maschine in einem montierten Zustand wieder verschließt.

Die Lagerstellen beziehungsweise die Kopplungsabschnitte 31, 32 dienen zur Aufnahme jeweiliger Lager und zum Verschrauben oder Anbringen der Kupplung 16 der Maschine 12. Die Naben 33, 34 weisen Ausnehmungen auf, die als Luftlöcher fungieren und zusammen mit dem Lüftungselement 36 einen vorgegebenen Kühlluftstrom ermöglichen. Das Lüftungselement 36 weist zum Beispiel eine Mehrzahl von Luftkanälen auf, die sich schräg mit einer vorgegebenen Neigung durch die zweite Nabe 34 hindurch erstrecken.

Dadurch, dass zumindest zwei, oder wie dargestellt sieben, Bauteile als eine gemeinsame Gusskomponente 3 ausgebildet sind, werden diese einzelnen Bauteile in einem einzigen Bauteil mit mehreren Funktionen integriert. Im Vergleich zu einem mehrteiligen Aufbau werden somit weniger Bauteile benötigt und das Läuferrohr 1 kann materialsparender gefertigt werden, sodass ein entsprechender Gewichtsvorteil realisierbar ist. Aufgrund der weniger anzufertigenden Bauteile kann ein Zusammenbau des Läuferrohrs 1 aufwandsärmer und zeitsparender durchgeführt werden. Somit können weitere Kosten eingespart werden und zudem ist es einfacher, technische Anforderungen an das Läuferrohr zu erfüllen.

Darüber hinaus werden Trennfugen zwischen den einzelnen Bauteilen vermieden beziehungsweise reduziert, welche jeweils eine potenzielle Problemstelle, zum Beispiel in Bezug auf Passung und Korrosion, darstellen. Aufgrund der Integration mehrerer Komponenten in einem einstückigen Gussteil entfallen solche Trennfugen und es kann zu einem zuverlässigen Betrieb und einer erhöhten Lebensdauer des Läuferrohr 1 und der mit dem Läuferrohr 1 versehenen Maschine 12 beigetragen werden. Außerdem trägt die beschriebene Ausgestaltung des Läuferrohrs 1 zu einer höheren Stabilität bei und dadurch zu einem sicheren und zuverlässigen Betrieb bei.

Figur 3 illustriert schematisch das Läuferrohr 1 in einem eingebauten Zustand in der elektrischen Maschine 12 des Schienenfahrzeugs 10. Das Läuferrohr 1 umgibt die Radsatzwelle 14 und ist mittels der Kupplung 16 mit dieser gekoppelt.

### Bezugszeichenliste

- 1: Läuferrohr
- 10: Fahrzeug
- 12: elektrische Maschine des Fahrzeugs
- 14: Radsatzwelle des Fahrzeugs
- 16: Kupplung des Fahrzeugs
- 3: Gusskomponente
- 31: erster Kopplungsabschnitt der Gusskomponente
- 32: zweiter Kopplungsabschnitt der Gusskomponente
- 33: erste Nabe der Gusskomponente
- 34: zweite Nabe der Gusskomponente
- 35: Außenrohr der Gusskomponente
- 36: Lüftungselement der Gusskomponente
- 37: Positionierungselement der Gusskomponente
- 4: Innenrohr
- 5: Positionierungselement

- L: Längsachse

## Patentansprüche

1. Elektrische Maschine (12), welche als eine permanentmagneterregte Synchronmaschine für einen direkten Antrieb einer Radsatzwelle (14) eines Schienenfahrzeugs (10) ausgestaltet ist, umfassend ein Läuferrohr (1), welches die Radsatzwelle (14) umgibt und die Maschine (12) mittels einer Kupplung (16) mit der Radsatzwelle (14) koppelt, wobei das Läuferrohr (1) umfasst:
- ein Außenrohr (35),
- einen ersten Kopplungsabschnitt (31) und einen zweiten Kopplungsabschnitt (32), die bezogen auf eine Längsachse (L) des Läuferrohrs (1) an gegenüberliegenden Endbereichen des Außenrohrs (35) mit dem Außenrohr (35) gekoppelt sind, wobei zumindest der erste Kopplungsabschnitt (31) einer Verbindung mit der Kupplung (16) dient,
- eine erste Nabe (33) und eine zweite Nabe (34), die bezogen auf die Längsachse (L) des Läuferrohrs (1) an den gegenüberliegenden Endbereichen des Außenrohrs (35) mit dem Außenrohr (35) gekoppelt sind,
- ein Lüftungselement (36), welches mit dem Außenrohr (35) gekoppelt ist, und
- ein Innenrohr (4), welches bezogen auf die Längsachse (L) des Läuferrohrs (1) innerhalb des Außenrohrs (35) angeordnet ist, sodass das Außenrohr (35) das Innenrohr (4) umgibt,
wobei
- der erste Kopplungsabschnitt (31), der zweite Kopplungsabschnitt (32), die erste Nabe (33), die zweite Nabe (34), das Außenrohr (35) und das Lüftungselement (36) des Läuferrohrs (1) einstückig mittels Gießen als Gusskomponente (3) ausgebildet sind.

2. Elektrische Maschine (12) nach Anspruch 1, wobei
das Lüftungselement (36) in die zweite Nabe (34) integriert ist.

3. Elektrische Maschine (12) nach Anspruch 1 oder 2, wobei
die erste Nabe (33) und die zweite Nabe (34) an einer Innenseite (38) des Außenrohrs (35) angeordnet sind, die dem Innenrohr (37) zugewandt ist.

4. Elektrische Maschine (12) nach Anspruch 3, wobei
der erste Kopplungsabschnitt (31) mittels der ersten Nabe (31) und der zweite Kopplungsabschnitt (32) mittels der zweiten Nabe (34) mit der Innenseite (38) des Außenrohrs (35) gekoppelt sind.

5. Elektrische Maschine (12) nach einem der vorhergehenden Ansprüche, ferner umfassend:
ein oder mehrere Positionierungselemente (37, 5), die dazu ausgebildet sind, das Innenrohr (4) bezogen auf die Längsachse (L) in einer vorgegebenen Position relativ zum Außenrohr (35) zu positionieren.

6. Elektrische Maschine (12) nach Anspruch 5, wobei
das Positionierungselement (37) einstückig mittels Gießen die Gusskomponente (3) ausbildet.

7. Elektrische Maschine (12) nach einem der vorhergehenden Ansprüche, wobei
das Innenrohr (4) einen inneren Kühlkreislauf des Läuferrohrs (1) gegenüber der Radsatzwelle (14) abdichtet.

8. Schienenfahrzeug (10), umfassend:
zumindest eine elektrische Maschine nach einem der Ansprüche 1 bis 7.

## Claims

1. Electric machine (12), which is embodied as a permanent magnet-excited synchronous machine for a direct drive of a wheelset shaft (14) of a rail vehicle (10), comprising a rotor tube (1), which surrounds the wheelset shaft (14) and couples the machine (12) to the wheelset shaft (14) by means of a coupling (16), wherein the rotor tube (1) comprises:
- an outer tube (35),
- a first coupling section (31) and a second coupling section (32), which are coupled to the outer tube (35) at opposite end regions of the outer tube (35) in relation to a longitudinal axis (L) of the rotor tube (1), wherein at least the first coupling section (31) serves to connect to the coupling (16),
- a first hub (33) and a second hub (34), which are coupled to the outer tube (35) at the opposite end regions of the outer tube (35) in relation to a longitudinal axis (L) of the rotor tube (1),
- a ventilation element (36), which is coupled to the outer tube (35), and
- an inner tube (4), which is arranged inside the outer tube (35) in relation to the longitudinal axis (L) of the rotor tube (1), so that the outer tube (35) surrounds the inner tube (4), wherein
- the first coupling section (31), the second coupling section (32), the first hub (33), the second hub (34), the outer tube (35) and the ventilation element (36) of the rotor tube (1) are embodied in one piece as a cast component (3) by means of casting.

2. Electric machine (12) according to claim 1, wherein
the ventilation element (36) is integrated into the second hub (34).

3. Electric machine (12) according to claim 1 or 2, wherein
the first hub (33) and the second hub (34) are arranged on an inner side (38) of the outer tube (35), which faces the inner tube (37).

4. Electric machine (12) according to claim 3, wherein
the first coupling section (31) is coupled to the inner side (38) of the outer tube (35) by means of the first hub (31) and the second coupling section (32) is coupled to the inner side (38) of the outer tube (35) by means of the second hub (34).

5. Electric machine (12) according to one of the preceding claims, further comprising:
one or more positioning elements (37, 5) which are embodied to position the inner tube (4) relative to the outer tube (35) in a predefined position in relation to the longitudinal axis (L) .

6. Electric machine (12) according to claim 5, wherein
the positioning element (37) embodies the cast component (3) in one piece by means of casting.

7. Electric machine (12) according to one of the preceding claims, wherein
the inner tube (4) seals off an inner cooling circuit of the rotor tube (1) from the wheelset shaft (14).

8. Rail vehicle (10), comprising:
at least one electric machine according to one of claims 1 to 7.

## Revendications

1. Machine (12) électrique, qui est conformée en machine synchrone à excitation par aimant permanent pour un entraînement direct d'un corps (14) d'essieu d'un véhicule (10) ferroviaire, comprenant un tuyau (1) rotorique, qui entoure le corps (14) d'essieu et la machine (12) est accouplée au corps (14) d'essieu au moyen d'un accouplement (16), dans laquelle le tuyau (1) rotorique comprend :
- un tuyau (35) extérieur,
- un premier tronçon (31) d'accouplement et un deuxième tronçon (32) d'accouplement, qui, rapporté à un axe (L) longitudinal du tuyau (1) rotorique, sont accouplés au tuyau (35) extérieur à des parties d'extrémité opposées du tuyau (35) extérieur, dans laquelle au moins la première partie (31) d'accouplement sert de liaison à l'accouplement (16),
- un premier moyeu (33) et un deuxième moyeu (34), qui, rapporté à l'axe (L) longitudinal du tuyau (1) rotorique, sont accouplés au tuyau (35) extérieur aux parties d'extrémité opposées du tuyau (35) extérieur,
- un élément (36) de ventilation, qui est accouplé au tuyau (35) extérieur, et
- un tuyau (4) intérieur, qui, rapporté à l'axe (L) longitudinal du tuyau (1) rotorique, est disposé à l'intérieur du tuyau (35) extérieur, de manière à ce que le tuyau (35) extérieur entoure le tuyau (4) intérieur,
dans laquelle
- la première partie (31) d'accouplement, la deuxième partie (32) d'accouplement, le premier moyeu (33), le deuxième moyeu (34), le tube (35) extérieur et l'élément (36) de ventilation du tuyau (1) rotorique sont constitués d'une seule pièce, comme composant (3) coulé au moyen d'une coulée.

2. Machine (12) électrique suivant la revendication 1, dans laquelle
l'élément (36) de ventilation est intégré au deuxième moyeu (34).

3. Machine (12) électrique suivant la revendication 1 ou 2,
dans laquelle
le premier moyeu (33) et le deuxième moyeu (34) sont disposés sur une face (38) intérieure du tuyau (35) extérieur, qui est tournée vers le tuyau (37) intérieur.

4. Machine (12) électrique suivant la revendication 3, dans laquelle
le premier tronçon (31) d'accouplement, au moyen du premier moyeu (31), et le deuxième tronçon (32) d'accouplement, au moyen du deuxième moyeu (34), sont accouplés à la face (38) intérieure du tuyau (35) extérieur.

5. Machine (12) électrique suivant l'une des revendications précédentes, comprenant en outre :
un ou plusieurs éléments (37, 5) de mise en position, qui sont constitués pour mettre le tuyau (4) intérieur, rapporté à l'axe (L) longitudinal dans une position donnée à l'avance par rapport au tuyau (35) extérieur.

6. Machine (12) électrique suivant la revendication 5, dans laquelle
l'élément (37) de mise en position constitue le composant (3) coulé d'une seule pièce au moyen d'une coulée.

7. Machine (12) électrique suivant l'une des revendications précédentes, dans laquelle
le tuyau (4) intérieur rend étanche un circuit de refroidissement intérieur du tuyau (1) rotorique par rapport au corps (14) de l'essieu.

8. Véhicule (10) ferroviaire, comprenant :
au moins une machine électrique suivant l'une des revendications 1 à 7.
